# EUROPÄISCHE PATENTANMELDUNG

(11) **EP 1 030 423 A2**
(43) Veröffentlichungstag der Anmeldung: **23.08.2000**
(21) Anmeldenummer: 00101253.3
(22) Anmeldetag: 25.01.2000
(51) Int. Cl.: H02B 11/26

(54) **Gasisolierte Schaltanlage**

(30) Priorität: 15.02.1999 DE 19906237
(71) Anmelder: ABB PATENT GmbH, 68309 Mannheim (DE)
(72) Erfinder: Koppelhuber, Volker, 21465 Wentorf (DE); Schumacher, Martin, Dr.-Ing., 63517 Rodenbach (DE)
(74) Vertreter: Miller, Toivo

(57) **Zusammenfassung**

Es wird ein gasisolierte Schaltanlage mit einem Mehrflanschgehäuse, insbesondere Vierflanschgehäuse vorgeschlagen, das Anschlußflansche (1, 4, 6, 8) für einen Leistungsschalter (3) und/oder einen Spannungswandler (5) und/oder einen Schnellerder (7) und einen Kabelabgang für den Anschluß eines Kabels aufweist. Im Kabelabgangsgehäuse (9) ist mindestens ein Überspannungsableiter (11) integriert, der mit seinem einen Hauptanschluß mit dem Leiter des mit Spannung beaufschlagten Kabels und mit seinem anderen Hauptanschluß mit dem geerdeten Kabelabgangsgehäuse (9) verbunden ist.

## Beschreibung

Die Erfindung bezieht sich auf eine gasisolierte Schaltanlage mit einem Mehrflanschgehäuse, insbesondere Vierflanschgehäuse, das Anschlußflansche für einen Leistungsschalter und/oder einen Spannungswandler und/oder einen Schnellerder und einen Kabelabgang für den Anschluß eines Kabels aufweist. Die Erfindung kann beispielsweise bei SF6-Hochspannungsschaltanlagen verwendet werden.

Es besteht allgemein die Forderung, gasisolierte Schaltanlage vor während des Betriebes auftretenden Überspannungen - beispielsweise durch Blitzeinschläge hervorgerufen - zu schützen. Dazu ist es erforderlich, einen Überspannungsableiter pro Phase möglichst nahe der gasisolierten Schaltanlage zu installieren. Es ist beispielsweise möglich, die Überspannungsableiter separat in einem eigenen Gehäuse unterzubringen. Bei Einsatz eines separaten Gehäuses wird ein zusätzlicher Anschlußflansch benötigt.

Bei einer dreiphasig gekapselten gasisolierten Schaltanlage sind standardmäßig alle vier Anschlußflansche eines Vierflanschgehäuses durch einen Leistungsschalter, einen Spannungswandler, einen Schnellerder und einen Kabelabgang bereits belegt. Um eine solche gasisolierte Schaltanlage zusätzlich mit einem Überspannungsableiter zu versehen, muß ein zusätzliches, zwischen dem Vierflanschgehäuse und dem Leistungsschalter zu installierendes Dreiflanschgehäuse vorgesehen werden, um einen weiteren Anschlußflansch zu schaffen.

Dies erfordert neben dem erhöhten Kostenaufwand einen erhöhten Raumbedarf, der die gasisolierte Schaltanlage und gegebenenfalls auch das die Schaltanlage enthaltende Gebäude in den Abmaßen nachteilig beeinflußt.

Der Erfindung liegt die Aufgabe zugrunde, eine gasisolierte Schaltanlage der eingangs genannten Art anzugeben, bei der mit minimalem zusätzlichem Raumbedarf ein Überspannungsableiter installiert werden kann.

Diese Aufgabe wird in Verbindung mit den Merkmalen des Oberbegriffes erfindungsgemäß dadurch gelöst daß im Kabelabgangsgehäuse mindestens ein Überspannungsableiter integriert ist, der mit seinem einen Hauptanschluß mit dem Leiter des mit Spannung beaufschlagten Kabels und mit seinem anderen Hauptanschluß mit dem geerdeten Kabelabgangsgehäuses verbunden ist.

Die mit der Erfindung erzielbaren Vorteile bestehen insbesondere darin, daß für den Einbau eines Überspannungsableiters bei einer dreiphasig gekapselten gasisolierten Schaltanlage ein zusätzliches Dreiflanschgehäuse nicht mehr erforderlich ist. Dementsprechend ergeben sich erhebliche Kosten- und Raumvorteile. Ein weiterer Vorteil ist darin zu sehen, daß bei der Projektierung der Schaltanlage und der Gebäudeplanung die Fragestellung entfällt, ob ein Überspannungsableiter gewünscht wird oder nicht. Da die Abmaße der Schaltanlage durch den Einbau eines Überspannungsableiters nicht beeinflußt werden, ist selbst eine spätere Nachrüstung von Schaltanlagen mit einem Überspannungsableiter problemlos möglich.

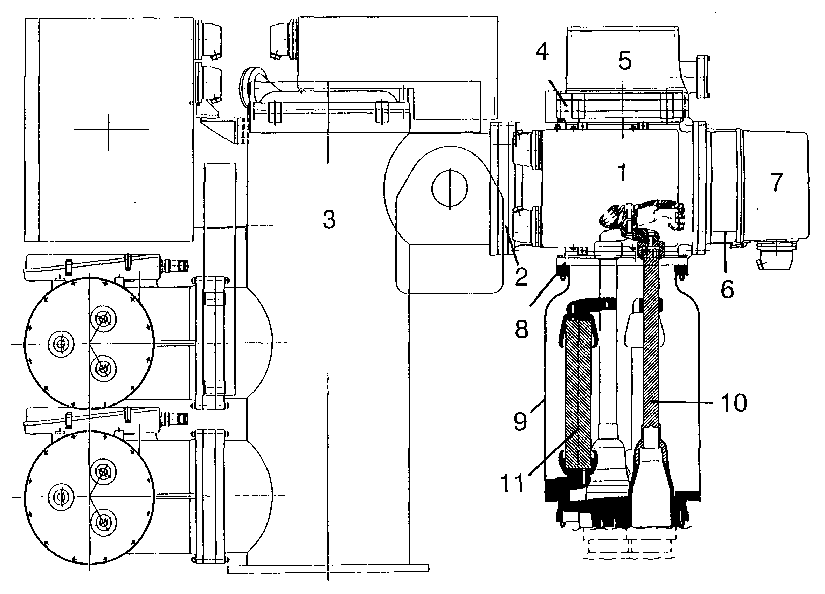

Die Erfindung wird nachstehend anhand des in der Zeichnung dargestellten Ausführungsbeispiels erläutert. In der Figur ist ein Schnitt durch eine gasisolierte Hochspannungsschaltanlage dargestellt. Es ist ein Vierflanschgehäuse 1 zu erkennen, an dessen ersten Anschlußflansch 2 ein Leistungsschalter 3 angeschlossen ist. Am zweiten Anschlußflansch 4 des Vierflanschgehäuse 1 ist ein Spannungswandler 5 befestigt. Am dritten Anschlußflansch 6 des Vierflanschgehäuse 1 ist ein Schnellerder 7 angeschlossen. An den vierten Anschlußflansch 8 des Vierflanschgehäuse 1 ist ein Kabelabgang mit Kabelabgangsgehäuse 9 montiert.

Der Kabelabgang weist in bekannter Weise einen Kabelendverschluß 10 auf, welcher zum Anschluß eines mit Hochspannungspotential beaufschlagten Kabels an die gasisolierte Hochspannungsschaltanlage dient. Des weiteren ist ein Überspannungsableiter 11 innerhalb des Kabelabgangsgehäuses 9 untergebracht. Der Überspannungsableiter 11 ist mit seinem einen Hauptanschluß mit dem Leiter des mit Hochspannungspotential beaufschlagten Kabels und mit seinem anderen Hauptanschluß mit dem geerdeten Kabelabgangsgehäuses 9 verbunden.

Bei Einsatz eines zwei- oder dreiphasigen Kabelanschlusses sind dementsprechend auch zwei oder drei Überspannungsableiter 11 innerhalb des Kabelabgangsgehäuses 9 vorgesehen.

## Patentansprüche

1. Gasisolierte Schaltanlage mit einem Mehrflanschgehäuse, insbesondere Vierflanschgehäuse, das Anschlußflansche (1, 4, 6, 8) für einen Leistungsschalter (3) und/oder einen Spannungswandler (5) und/oder einen Schnellerder (7) und einen Kabelabgang für den Anschluß eines Kabels aufweist, dadurch gekennzeichnet, daß im Kabelabgangsgehäuse (9) mindestens ein Überspannungsableiter (11) integriert ist, der mit seinem einen Hauptanschluß mit dem Leiter des mit Spannung beaufschlagten Kabels und mit seinem anderen Hauptanschluß mit dem geerdeten Kabelabgangsgehäuse (9) verbunden ist.
